# FASCICULE DE BREVET EUROPEEN

(11) **EP 2 923 154 B1**
(45) Date de publication et mention de la délivrance du brevet: **13.02.2019**
(21) Numéro de dépôt: 13808104.7
(22) Date de dépôt: 25.11.2013
(51) Int. Cl.: B29L 31/00, B29C 45/14, B29D 11/00, B29K 83/00, B29L 11/00, H05B 3/68, F24C 7/08, H05B 3/74

(54) **PLAQUE DE CUISSON À FENÊTRE ET FLASQUE, APPAREIL DE CUISSON, ET PROCÉDÉ DE FABRICATION DE LA PLAQUE**
KOCHFELD MIT FENSTER UND ENDPLATTE, GARVORRICHTUNG UND VERFAHREN ZUR HERSTELLUNG DES KOCHFELDES
COOKTOP WITH WINDOW AND END PLATE, COOKING APPLIANCE, AND METHOD FOR MANUFACTURING THE COOKTOP

(30) Priorité: 26.11.2012 FR 1261219
(43) Date de publication de la demande: 30.09.2015
(73) Titulaire: Eurokera S.N.C., 02407 Château Thierry (FR)
(72) Inventeur: VERRAT-DEBAILLEUL, Adèle, F-60150 Villers-Sur-Coudun (FR); HUCHET, Gérard, F-60350 Autreches (FR); MOTTELET, Béatrice, F-60200 Compiègne (FR); FERRIZ, Gaëlle, F-51100 Reims (FR)
(74) Mandataire: Saint-Gobain Recherche
(86) Numéro de dépôt international: PCT/FR2013/052840
(87) Numéro de publication internationale: WO 2014/080146

(56) Documents cités:
- EP-A1- 2 226 565
- DE-A1-102007 021 939
- FR-A1- 2 789 624

## Description

La présente invention se rapporte à un appareil de cuisson à plaque de cuisson et notamment un appareil de cuisson fixe destiné à être intégré dans une baie ménagée dans un plan de travail ou dans une cuisinière ou un appareil de cuisson mobile qui peut être déplacé manuellement et facilement.

Un appareil de cuisson à plaque de cuisson comporte une plaque de cuisson, par exemple en vitrocéramique, sur laquelle peut être positionnée une casserole, une poêle ou tout autre ustensile susceptible de contenir des denrées alimentaires à réchauffer ou à cuire, voire sur laquelle peuvent être positionnés directement des denrées alimentaires à réchauffer ou à cuire.

Cet appareil de cuisson, présente par ailleurs en général un caisson comportant un fond et des parois latérales formant une base à l'intérieure de laquelle est (ou sont) positionné(s) un (ou plusieurs) élément(s) chauffant(s), comme par exemple un (ou des) foyer(s) radiant(s) ou halogène(s), ainsi que des moyens de régulation pour faire varier la puissance de celui-ci (ou de ceux-ci), voire pour programmer sou (ou leur) déclanchement et son (ou leur) arrêt. La plaque de cuisson ferme le dessus du caisson.

La présente invention concerne plus particulièrement une plaque de cuisson pour un appareil de cuisson fixe ou mobile comportant d'une part une plaque de base, notamment une plaque de base vitrocéramique, présentant au moins une zone de cuisson et comportant d'autre part au moins une zone de commande et/ou d'information, ladite zone de commande et/ou d'information étant formée par une fenêtre séparée de ladite plaque de base par au moins un joint en matière synthétique.

Il est connu notamment de la demande de brevet français N° FR 2 746 904, de réaliser un joint entre une fenêtre sous laquelle est positionné un écran et la plaque de base. L'invention qui fait l'objet de ce document réside dans la sélection de la matière du joint pour permettre l'étanchéité entre la fenêtre et la plaque de base.

Ce document montre en figure 3 un écran qui « flotte dans le vide » ; aucun moyen de fixation de l'écran n'est décrit. Il est supposé que l'écran est fixé au caisson, mais il n'y a pas d'information à ce sujet.

Un premier inconvénient de cette configuration est que le joint est susceptible d'être endommagé par la chaleur émise par un ustensile chaud qui serait positionné très près, voire dessus.

Un second inconvénient de cette configuration est qu'il est difficile de réaliser le positionnement précis et la fixation précise, dans les trois dimensions de l'espace, de l'écran vis-à-vis de la fenêtre qui est située au-dessus ; or, ce positionnement est très important pour assurer une perception de qualité de l'affichage de l'écran à travers la fenêtre.

Ces deux inconvénients sont renforcés par le fait que la liaison entre la fenêtre et la plaque de base est une liaison à élasticité permanente selon ce document. Cette liaison est donc fragile au regard de la chaleur qui peut être émise par un ustensile à proximité ou sur la liaison et n'est donc pas rigide et la fenêtre peut ainsi bouger à l'usage. Ce mouvement est néfaste pour la perception de l'affichage de l'écran à travers la fenêtre.

Ce problème de la bonne perception de l'affichage de l'écran à travers la fenêtre est d'autant plus important qu'il est maintenant possible de réaliser des écrans de petites tailles présentant des résolutions très élevées ; toutefois, si le dernier élément interposé entre l'écran et l'observateur n'est pas bien conçu, alors la résolution finale s'en trouve gravement affectée.

Il est connu par ailleurs des demandes de brevet européen N° EP 570 670 et EP 2 226 565, ainsi que de la demande de brevet allemand N° DE 10 2007 021 939, de prévoir un joint comprenant du silicone entre une plaque de base et une fenêtre. Un tel joint est résistant à la chaleur mais est onéreux et est difficile à mettre en oeuvre dans un procédé de fabrication industriel en grande quantité, notamment par moulage.

Le but de l'invention est de pallier les inconvénients de l'art antérieur et de fournir une solution facile à mettre en oeuvre et peu onéreuse pour permettre l'étanchéité entre la fenêtre et la plaque de base vis-à-vis de l'extérieur à l'aide d'un joint et pour assurer la protection de ce joint vis-à-vis d'un ustensile chaud positionné à proximité de ce joint, voire sur ou au-dessus de ce joint.

Un autre but est de fournir une solution pour le positionnement fiable et précis et la fixation fiable et précise d'un écran de visualisation par rapport à une fenêtre ménagée dans une plaque de cuisson et à travers laquelle l'affichage de cet écran est visualisé.

La présente invention se rapporte ainsi dans son acception la plus large à une plaque de cuisson pour un appareil de cuisson fixe ou mobile selon la revendication 1. Cette plaque de cuisson comporte une plaque de base, notamment une plaque de base vitrocéramique, présentant un chant, une surface extérieure et une arête extérieure périphérique formant un plan et qui est située à l'intersection entre ledit chant de ladite plaque de base et ladite surface extérieure de ladite plaque de base, ladite plaque de cuisson comportant au moins une zone de cuisson et au moins une zone de commande et/ou d'information, ladite zone de commande et/ou d'information comportant une fenêtre séparée de ladite plaque de base et présentant un chant, une surface extérieure et une arête extérieure périphérique située à l'intersection entre ledit chant de ladite fenêtre et ladite surface extérieure de ladite fenêtre, ladite plaque de cuisson comportant en outre un joint en matière synthétique qui est situé entre une partie du chant de ladite plaque de base et une partie du chant de ladite fenêtre pour permettre l'étanchéité entre la fenêtre et la plaque de base vis-à-vis de l'extérieur, ledit joint présentant une surface extérieure.

Cette plaque de cuisson est remarquable en ce que :
- une partie au moins de, ou toute, l'arête extérieure périphérique de ladite fenêtre est dans le plan de l'arête extérieure de ladite plaque de base, et en ce que
- une partie au moins de la surface extérieure dudit joint qui est située entre la surface extérieure de ladite plaque de base et la surface extérieure de ladite fenêtre est couverte par un flasque en matière différente de celle du joint.

Le joint permet l'étanchéité vis-à-vis de l'extérieur. Il est en contact avec au moins la moitié de la hauteur du chant de ladite plaque de base et est en contact avec au moins la moitié de la hauteur du chant de ladite fenêtre ; il assure l'étanchéité pour empêcher tout fluide venant de l'extérieur de pénétrer entre ces deux chants.

Ce n'est pas le flasque qui assure l'étanchéité vis-à-vis de l'extérieur, mais bien le joint ; le flasque est sur ou au-dessus du joint pour le protéger.

Il est possible qu'une partie seulement de l'arête extérieure de ladite fenêtre soit dans le plan de l'arête extérieure de ladite plaque de base.

Il est possible par ailleurs qu'une partie au moins de, ou toute, l'arête extérieure de ladite fenêtre ne soit pas dans le plan de l'arête extérieure de ladite plaque de base.

La présente invention propose ainsi de protéger le joint qui est prévu au moins en partie autour de la fenêtre, entre la fenêtre et la plaque de base afin d'empêcher le contact entre un ustensile chaud et ce joint.

Ainsi, de préférence, le joint qui est situé entre une partie du chant de ladite plaque de base et une partie du chant de ladite fenêtre ne comporte pas de silicone.

Une première option consiste à choisir la matière du flasque telle qu'elle présente un point de transformation solide à visqueux Tg, ou un point de fusion Tf, qui est supérieur au point de transformation de la matière dudit joint Tg' afin que le flasque apporte une résistance supplémentaire à la chaleur ; De préférence la matière dudit flasque présente un point de transformation solide à visqueux Tg, ou un point de fusion Tf, qui est supérieur d'au moins 20°C, et de préférence encore d'au moins 50 °C, au point de transformation de la matière dudit joint Tg'.

Une seconde option consiste à choisir la matière du flasque telle qu'elle présente un point de transformation solide à visqueux Tg, ou un point de fusion Tf, qui est supérieur à 200°C, et de préférence supérieur à 250°C, voire supérieur à 300°C. Ainsi la matière du flasque résistera à la présence et au contact d'une source de chaleur respectivement de 200°C, voire de 250°C, voire encore de 300°C.

Il est possible de choisir la matière du joint telle qu'elle présente un point de transformation solide à visqueux Tg, ou un point de fusion Tf, qui est égal ou inférieur à 200°C, voire qui est égal ou inférieur à 180°C. Ainsi, il n'est pas nécessaire de choisir une matière de joint telle qu'elle présente un point de transformation solide à visqueux Tg, ou un point de fusion Tf, très élevé. Par exemple, certaines matières en silicone thermoplastiques peuvent résister (c'est-à-dire sans modification de leurs propriétés mécaniques) à des températures jusqu'à 225°C, voire même jusqu'à 320°C, mais en général ces matières sont très onéreuses et sont difficiles à mettre en oeuvre.

Dans le cadre du présent document, « point de transformation solide à visqueux Tg » est à comprendre comme une « température de transition vitreuse, Tg », au sens habituel.

Il est possible par ailleurs qu'une lame d'air et/ou un élément isolant (par exemple en mousse de polystyrène ou de polyuréthane ou en céramique ou comportant des fibres minérales et notamment des fibres de verre) soit interposé entre ledit flasque et ledit joint, sous une partie dudit flasque pour améliorer encore l'effet de protection du joint par le flasque.

Le flasque selon l'invention est de préférence unique. Il est, de préférence, présent tout le long de la partie du joint qui sépare ladite fenêtre de ladite plaque de base. Si plusieurs flasques sont prévus le long du joint, la distance entre deux flasques doit être égale ou inférieure à 2 mm afin de conserver l'effet de protection contre la chaleur.

Le joint couvre, de préférence, au moins une partie de la longueur de l'arête extérieure de ladite plaque de base et/ou le joint couvre, de préférence, au moins une partie de la longueur de l'arête extérieure de ladite fenêtre.

Le flasque peut être dans la continuité (« flush ») d'une partie au moins de la longueur de l'arête extérieure de ladite plaque de base et/ou peut être dans la continuité (« flush ») d'une partie au moins de la longueur de l'arête extérieure de ladite fenêtre afin d'obtenir une bonne intégration visuelle du flasque.

Il est préférable par ailleurs que, vu en coupe verticale à un endroit au moins, ledit joint présente une surface extérieure visible (c'est-à-dire non couverte par une partie de flasque) dont la largeur est égale ou inférieure à 2 mm, ledit flasque recouvrant de préférence toute la surface extérieure du joint qui est située entre la surface extérieure de ladite plaque de base et la surface extérieure de ladite fenêtre, afin d'être sûr que la chaleur d'un ustensile ne puisse pas endommager le joint.

Dans une version particulière, ledit flasque comporte, vu en coupe verticale à un endroit au moins, deux parties :
- une partie sensiblement verticale située au-dessus du plan de la surface extérieure de ladite plaque de base, et
- une partie sensiblement horizontale située dans la continuité (« flush ») d'une partie au moins de l'arête extérieure de ladite fenêtre ou située au-dessus d'une partie au moins de l'arête extérieure de ladite fenêtre.

Dans une autre version particulière, ledit flasque comporte, vu en coupe verticale à un endroit au moins, une forme de S avec d'une part la partie haute du S située dans la continuité (« flush ») d'une partie au moins de la surface extérieure de ladite fenêtre ou située au-dessus d'une partie au moins de la surface extérieure de ladite fenêtre et avec d'autre part la partie basse du S s'étendant vers ladite plaque de base et située au-dessus de la surface extérieure de ladite plaque de base.

Dans une autre version particulière, ledit flasque comporte, vu en coupe verticale à un endroit au moins, une forme de S avec d'une part la partie haute du S située dans la continuité (« flush ») d'une partie au moins de l'arête extérieure de ladite fenêtre ou située au-dessus d'une partie au moins de l'arête extérieure de ladite fenêtre et avec d'autre part la partie basse du S s'étendant vers ladite plaque de base et située plus bas que le plan de la surface extérieure de ladite plaque de base.

Dans une autre version particulière, le flasque comporte, vu en coupe verticale à un endroit au moins, une forme de C ou Ç avec d'une part la partie haute du C située dans la continuité (« flush ») d'une partie au moins de l'arête extérieure de ladite fenêtre ou située au-dessus d'une partie au moins de l'arête extérieure de ladite fenêtre et avec d'autre part la partie basse du C s'étendant vers ladite fenêtre et située au-dessus du plan de la surface extérieure de ladite plaque de base.

De préférence, la plaque de cuisson comporte un écran de commande et/ou de visualisation sous ladite fenêtre. Il est alors possible que ce soit le joint et/ou le flasque qui comporte(nt) des moyens pour la fixation de cet écran de commande et/ou de visualisation sous ladite fenêtre.

La présente invention propose ainsi d'utiliser directement le joint qui est prévu au moins en partie autour de la fenêtre, entre la fenêtre et la plaque de base, pour positionner et fixer correctement l'écran de commande et/ou de visualisation vis-à-vis de cette fenêtre et/ou d'utiliser directement le flasque protégeant le joint qui est prévu au moins en partie autour de la fenêtre, entre la fenêtre et la plaque de base, pour positionner et fixer correctement l'écran de commande et/ou de visualisation vis-à-vis de cette fenêtre.

La fenêtre qui est ainsi située au-dessus de l'écran de commande et/ou de visualisation est transparente afin de permettre de voir à travers ce qui est affiché à l'écran ; elle est en une matière différente de celle de la plaque de base ; l'écran est de type LCD, LED ou OLED et peut-être un écran tactile.

La fixation de l'écran au joint est de préférence une fixation mécanique et n'est ainsi pas une fixation chimique (notamment collage).

Le joint présente, de préférence, ainsi une partie centrale qui est située à la fois en vis-à-vis d'au moins une partie du chant de la fenêtre et en vis-à-vis d'une partie du pourtour du trou ménagé dans la plaque de base et qui accueille la fenêtre.

Selon une caractéristique importante de l'invention, ledit joint présente, de préférence une partie de joint intérieure s'étendant sous une surface intérieure de ladite plaque de base et/ou sous une surface intérieure de ladite fenêtre. Cette partie intérieure permet ainsi d'augmenter la tenue mécanique de la liaison entre le joint et respectivement ladite plaque de base et/ou ladite fenêtre.

Cette partie de joint intérieure peut présenter par exemple, sous la surface intérieure de la fenêtre, en coupe verticale, une forme de C ou de L.

Selon des variantes de l'invention, la plaque de cuisson peut comporter :
- au moins un insert qui est complètement intégré dans ledit joint,
- d'une part une semelle qui est intégrée au moins partiellement, voire complètement, dans une portion de matière dudit joint et d'autre part au moins un élément saillant faisant saillie au moins partiellement, voire complètement, en dehors dudit joint, pour la fixation dudit écran de commande et/ou de visualisation ;
- au moins une vis et/ou un support et/ou un clip et/ou un rail, pour la fixation de l'écran de commande et/ou de visualisation audit joint.

Il est possible par ailleurs qu'une partie au moins d'une surface extérieure de ladite fenêtre (cas de la fenêtre inclinée par rapport à la plaque de base), voire que toute une surface extérieure de ladite fenêtre (cas de la fenêtre saillante ou en retrait par rapport à la plaque de base) n'est pas dans le plan d'une surface extérieure de ladite plaque de base.

De préférence, ledit joint présente une partie de joint extérieure s'étendant au-dessus d'une partie centrale de joint et s'étendant éventuellement sur une surface extérieure de ladite plaque de base et/ou sur une surface extérieure de ladite fenêtre.

La présente invention se rapporte également à un appareil de cuisson fixe ou mobile muni d'une plaque de cuisson selon l'invention.

La présente invention se rapporte également à plusieurs modes de fabrication de la plaque de cuisson selon l'invention.

Dans un premier procédé de fabrication de la plaque de cuisson selon l'invention, ladite plaque de base, ladite fenêtre et ledit flasque au moins sont disposés dans un moule qui est ensuite fermé et une matière synthétique est ensuite injectée dans une cavité de moulage afin de former ledit joint.

Dans un deuxième procédé de fabrication de la plaque de cuisson selon l'invention, un joint préformé et comportant ledit flasque au moins est collé à ladite plaque de base et/ou à ladite fenêtre.

Dans un troisième procédé de fabrication de la plaque de cuisson selon l'invention, ledit joint comportant ledit flasque au moins est moulé contre ladite plaque de base ou contre ladite fenêtre, ladite fenêtre ou respectivement ladite plaque de base étant ensuite introduite dans une rainure d'un cadre formé par le joint lorsque celui est chaud.

Avantageusement, la présente invention permet, d'une manière simple et efficace, dans une plaque de cuisson, de protéger de la chaleur le joint situé entre la plaque de base et la fenêtre. Il n'est ainsi pas nécessaire de mettre en oeuvre un joint très complexe et très onéreux qui présenterait en lui-même la capacité de résister à la chaleur d'un ustensile posé à proximité ou dessus. Le flasque réalise ainsi un carter pour protéger efficacement le joint de la chaleur qui pourrait affecter ses propriétés et/ou son aspect.

Avantageusement également, le joint selon l'invention permet de protéger le chant de la fenêtre, même si cette fenêtre n'est pas dans la continuité de surface de la plaque (en saillie par rapport à la surface extérieure de la plaque mais parallèle à la plaque) ou si cette fenêtre est inclinée par rapport à la plaque.

Avantageusement également, le joint selon l'invention permet de positionner avec précision dans les trois dimensions de l'espace et de fixer avec précision dans les trois dimensions de l'espace un écran de commande et/ou de visualisation vis-à-vis d'une fenêtre située au-dessus. La précision de positionnement et la précision de fixation peuvent atteindre par exemple le dixième de millimètre.

Avantageusement également, le joint selon l'invention permet d'assurer l'étanchéité aux fluides entre le chant de la fenêtre et le pourtour du trou réalisé dans la plaque, même si cette fenêtre n'est pas dans la continuité de surface de la plaque (en saillie par rapport à la surface extérieure de la plaque mais parallèle à la plaque) ou si cette fenêtre est inclinée par rapport à la plaque.

Avantageusement également, la solution de l'invention est applicable même lorsque la zone de commande et/ou d'information est située sur le bord de la plaque de cuisson.

Avantageusement en outre, le fait que l'écran de commande et/ou de visualisation soit fixé au joint et/ou au flasque permet d'opérer facilement le changement de l'écran si besoin (en cas d'écran défaillant) : il suffit d'accéder sous la plaque de cuisson et de défaire les moyens pour la fixation de l'écran ; en outre, il est facile et peu onéreux de procéder au changement de l'écran défaillant par un écran fonctionnant correctement et qui sera à son tour positionné avec précision et fixé avec précision vis-à-vis de la fenêtre ; il n'est pas nécessaire de changer la plaque de base, ni la fenêtre, ni de refaire le joint entre la plaque de base et la fenêtre.

Il est possible par ailleurs de prévoir que les flasques ne présentent pas le même aspect extérieur et en particulier ne présentent pas la même couleur de surface extérieure d'une plaque de cuisson à une autre, afin de permettre de « personnaliser » les plaques de cuisson d'une même série.

La présente invention sera mieux comprise à la lecture de la description détaillée ci-après d'exemples de réalisation non limitatifs et des figures ci-jointes :
- La figure 1 illustre une vue schématique de dessus d'une plaque de cuisson selon l'invention à plaque de base comportant un trou complet et une fenêtre dans ce trou ;
- La figure 2 illustre une vue en coupe verticale partielle selon AA' de la figure 1 ;
- Les figures 3 à 11 illustrent respectivement une coupe équivalente à celle de la figure 2 pour d'autres variantes de réalisation l'invention ;
- La figure 12 illustre une vue schématique d'une autre plaque de base selon l'invention à encoche pour accueillir une fenêtre ;
- La figure 13 illustre une vue en coupe d'un exemple de réalisation d'un moule pour la réalisation du joint selon un mode de réalisation du joint selon la figure 3 ; et
- Les figures 14 à 16 illustrent respectivement une vue de dessus d'une partie du moule de la figure 13 et une vue en coupe verticale partielle selon B-B' et selon C-C' de la figure 14.

Il est précisé que les proportions entre les divers éléments représentés ne sont pas rigoureusement respectées dans ces figures et les éléments en arrière plan ne sont pas tous représentés afin d'en faciliter la lecture. En particulier la distance visible sur les figures entre la plaque de base et la fenêtre n'a aucune valeur limitative.

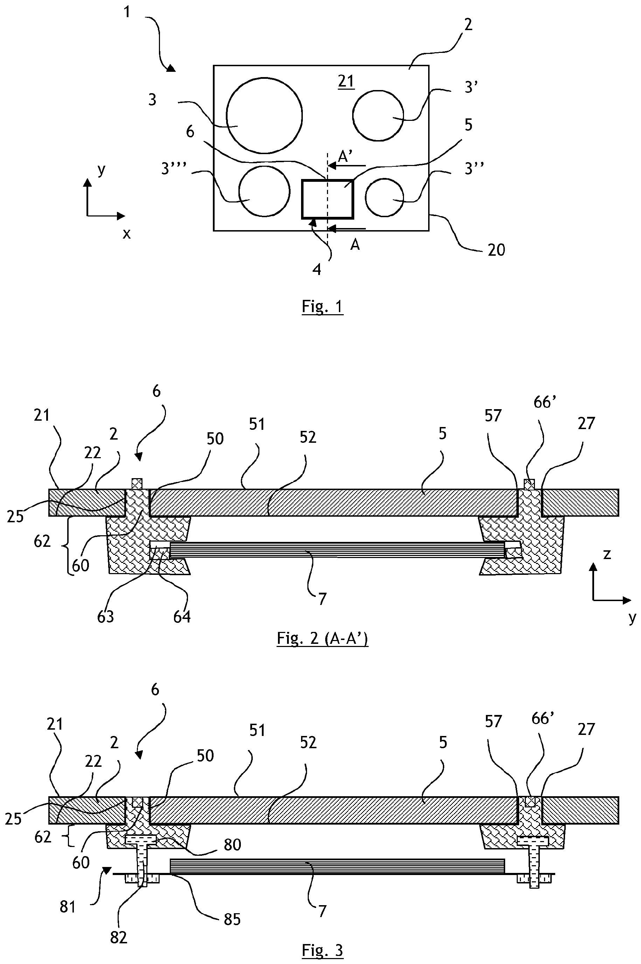

La figure 1 illustre un exemple de réalisation d'un appareil de cuisson selon l'invention. L'appareil illustré ici présente ainsi une forme générale parallélépipédique droite.

L'appareil illustré ici est un appareil de cuisson fixe, encore appelé « appareil intégré », qui est destiné à être installé dans une baie ménagée dans un plan de travail ou dans une cuisinière et qui, une fois installé et fixé, ne peut plus être déplacé ; toutefois, la présente invention est aussi applicable à un appareil de cuisson mobile, se présentant sous la forme d'un caisson et qui peut être positionné par exemple sur un plan de travail ou sur une table de repas et qui peut être déplacé manuellement.

L'appareil de cuisson comporte une plaque 1 de cuisson qui est plate et qui présente une forme générale de parallélépipède droit (c'est-à-dire de rectangle ou carré vue de dessus).

Cette plaque 1 de cuisson comporte une plaque de base 2, qui peut être en particulier une plaque vitrocéramique.

Même si la forme la plus courante pour la plaque de base est une forme de rectangle vue de dessus, la plaque de base peut aussi présenter, vue de dessus, une forme circulaire, ou en haricot, ou encore trapézoïdale ; la seule contrainte de forme est celle liée au mode de fabrication de la plaque de base.

La plaque de base 2 comporte une surface extérieure 21 destinée à être positionnée horizontalement et sur laquelle reposent les ustensiles de cuisson (casseroles ou autres) à chauffer ; Dans la suite de la description, la plaque de cuisson 1 selon l'invention est considérée comme étant positionné horizontalement et les positionnements : sous/en dessous et sur/au-dessus sont réalisés par rapport à la verticale.

La plaque de base 2 comporte en outre une surface intérieure 22 qui est située en vis-à-vis de sa surface extérieure 21 ainsi qu'un chant 20, périphérique, située entre ces deux surfaces.

La plaque de base 2 présente par ailleurs une arête extérieure 27 périphérique qui est située à la jonction entre son chant 20 et sa surface extérieure 21 et qui forme un plan. Ce plan est ainsi défini par le pourtour de la plaque de base 2 qui est formé par l'arête extérieure 27.

Même si une plaque de base est en général plate, il peut arriver qu'une plaque de base soit incurvée, notamment vers l'intérieur de l'appareil de cuisson. Dans ce cas, la forme incurvée est réalisée à l'intérieur du pourtour périphérique de la plaque de base qui est définie par l'arête extérieure 27, afin que cette arête extérieure forme toujours un plan.

La plaque 1 de cuisson présente ici quatre zones de cuisson 3, 3', 3", 3"', représentées ici par des ronds de diamètres différents, mais qui peuvent être de toute forme.

La plaque 1 de cuisson comporte par ailleurs une zone de commande et/ou d'information 4.

Sous chaque zone de cuisson est positionné un élément chauffant (non illustré) tel qu'un élément radiant ou halogène et/ou au moins un brûleur à gaz et/ou au moins une bobine de chauffage par induction. Par ailleurs, pour simplifier également, l'alimentation de l'élément chauffant n'a pas été illustrée.

La zone de commande et/ou d'information 4 est l'endroit d'où il est possible de commander le fonctionnement de chaque zone de cuisson 3, 3', 3", 3'" et/ou où il est possible de visualiser des informations relatives au fonctionnement de chaque zone de cuisson 3, 3', 3", 3'".

Ici, la zone unique de commande et/ou d'information 4 est l'endroit d'où il est possible de commander indépendamment le fonctionnement de toutes les zones de cuisson 3, 3', 3", 3'" et où il est possible de visualiser indépendamment des informations relatives au fonctionnement de toutes ces zones de cuisson 3, 3', 3", 3'" ; toutefois, il pourrait y avoir par exemple deux zones de commande et/ou d'information, avec pour chaque zone de commande et/ou d'information la possibilité de commander indépendamment le fonctionnement de deux des quatre zones de cuisson et la possibilité de visualiser indépendamment des informations relatives au fonctionnement de ces deux zones de cuisson.

Il est possible par ailleurs que la (ou chaque) zone de commande et/ou d'information permette de commander d'autre(s) appareil(s) et/ou de visualiser des informations relatives à d'autre(s) appareil(s), ou même de visualiser tout type d'information.

La zone de commande et/ou d'information 4 est formée par une fenêtre 5 qui est en une matière différente de celle de la plaque de base 2.

En particulier, lorsque la plaque de base 2 est en vitrocéramique, sa matière constitutive empêche une transmission claire et précise d'information à travers.

La fenêtre 5 est de préférence en verre, éventuellement trempé thermiquement ou chimiquement ou éventuellement durci. Elle est transparente, avec une transmission lumineuse intégrée dans le visible supérieure à 70 % (mesurée par exemple selon l'illuminant D65) ; elle est claire et présente de préférence un flou inférieur à 50 %.

Il est possible de prévoir un film polymère transparent sous une feuille de verre pour former une fenêtre 5 particulièrement résistante.

La fenêtre 5 est séparée, de préférence sans contact physique direct, de la plaque de base 2 par un joint 6 en matière synthétique, non minérale.

Ici, la fenêtre 5 présente vue de dessus la forme d'un rectangle et est positionnée dans un trou de forme similaire mais dont le pourtour 25 est un petit peu plus large et un petit peu plus long que la fenêtre et qui a été ménagé préalablement dans la plaque de base 2. Ce trou est un trou débouchant dans le sens où il débouche sur la surface extérieure 21 de la plaque de base 2, ainsi que sur sa surface opposée : la surface intérieure 22 de la plaque de base 2 (non visible en figure 1) ; ce trou, parallélépipédique, est un trou complet dans le sens où toute sa périphérie extérieure est réalisée en surface extérieure 21 et toute sa périphérie intérieure est réalisée en surface intérieure 22.

Même si la forme la plus courante pour la fenêtre est une forme de rectangle vue de dessus, la fenêtre peut aussi présenter, vue de dessus, une forme circulaire, ou en haricot, ou encore trapézoïdale ; la seule contrainte de forme est celle liée au mode de fabrication de la fenêtre.

La fenêtre 5 comporte une surface extérieure 51 orientée dans l'espace comme la surface extérieure 21 de la plaque de base 2, c'est-à-dire qui est sur le dessus de l'appareil de cuisson.

La fenêtre 5 comporte en outre une surface intérieure 52 qui est située en vis-à-vis de sa surface extérieure 51 ainsi qu'un chant 50, périphérique, située entre ces deux surfaces.

Le chant 50 de la fenêtre 5 est plus petit que le pourtour 25 du trou de la plaque de base lorsque la fenêtre est située dans ce trou ; toutefois, la fenêtre 5 peut aussi être positionnée au-dessus de ce trou en étant plus grande que ce trou et il est alors possible que le chant 50 de la fenêtre 5 soit plus grand que le pourtour 25 du trou de la plaque de base.

La fenêtre 5 présente par ailleurs une arête extérieure 57 périphérique qui est située à la jonction entre son chant 50 et sa surface extérieure 51 et qui forme un plan. Ce plan est ainsi défini par le pourtour de la fenêtre 5 qui est formé par l'arête extérieure 57.

Même si une fenêtre 5 est en général plate, il peut arriver qu'une fenêtre 5 soit incurvée, notamment vers l'intérieur de l'appareil de cuisson. Dans ce cas, la forme incurvée est, de préférence, réalisée à l'intérieur du pourtour périphérique de la fenêtre 5 qui est définie par l'arête extérieure 57, afin que cette arête extérieure forme un plan, afin de faciliter l'intégration de la fenêtre 5 par rapport à la plaque de base 2.

Le joint 6, qui est situé entre une partie du chant 20 de la plaque de base 2 et une partie du chant 50 de la fenêtre 5, et qui réalise ainsi une jonction de matière entre le chant de la plaque de base et le chant de la fenêtre, présente aussi une surface extérieure 61 qui est aussi orientée dans l'espace comme la surface extérieure 21 de la plaque de base 2, c'est-à-dire qui est sur le dessus de l'appareil de cuisson.

Le joint 6 peut être par exemple à base de thermoplastique ; il peut être à base de ou en : polycarbonate, polychlorure de vinyle, ou encore polyuréthane ; toutes ces matières ont une température de fusion qui est égale ou inférieure à 200°C et même qui est égale ou inférieure à 180°C.

Une partie au moins de la surface extérieure 61 du joint 6 qui est située entre la surface extérieure 21 de ladite plaque de base 2 et la surface extérieure 51 de la fenêtre 5 est couverte un flasque 66, 66' en une matière différente de celle joint 6.

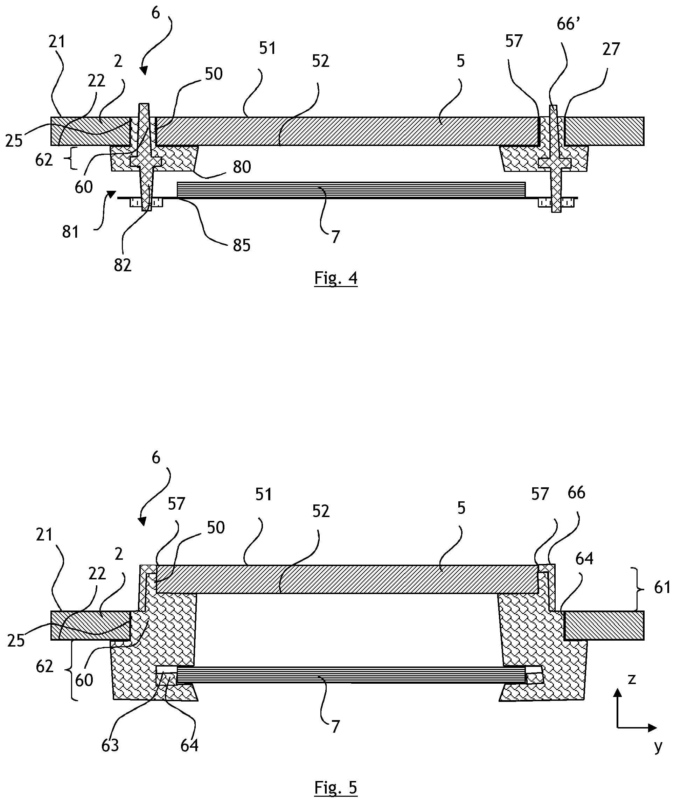

Le flasque 66 protège ainsi le joint 6 dans la configuration où une partie au moins de, ou toute, l'arête extérieure 57 de la fenêtre 5 n'est pas dans le plan de l'arête extérieure 27 de la plaque de base 2, comme visible en figures 5 à 8, 9 à droite, 10 et 11.

Le flasque 66' protège ainsi le joint 6 dans la configuration où une partie au moins de, ou toute, l'arête extérieure 57 de la fenêtre 5 est dans le plan de l'arête extérieure 27 de la plaque de base 2, comme visible en figures 2 à 4 et 9 à gauche.

Le flasque 66, 66' peut être par exemple en acier inoxydable, d'une épaisseur de 2 mm, voire éventuellement moins. La température de fusion de la matière du flasque est supérieure à 200°C, et même supérieure à 250°C, et même supérieure à 300°C.

Dans une variante visible aux figures 2, 3 et 5 à 11, ledit joint 6 comporte des moyens pour la fixation, directement ou indirectement au joint 6, dans les trois dimensions de l'espaces x, y , z, d'un écran 7 de commande et/ou de visualisation sous la fenêtre 5, de telle sorte que l'orientation dudit écran par rapport à la fenêtre 5 soit inchangée dès que l'écran est fixé rigidement à ladite fenêtre et qu'il soit alors possible de visualiser l'affichage de l'écran 7 à travers la fenêtre 5.

Dans une autre variante visible à la figure 4, c'est le flasque 66' qui comporte des moyens pour la fixation d'un écran 7 de commande et/ou de visualisation sous ladite fenêtre 5. Bien que cela ne soit pas illustré, cette variante s'applique aussi au flasque 66 qui protège ainsi le joint 6 dans la configuration où une partie au moins de, ou toute, l'arête extérieure 57 de la fenêtre 5 n'est pas dans le plan de l'arête extérieure 27 de la plaque de base 2.

Dans ces deux variantes, l'écran 7 est ainsi correctement parallèle à la fenêtre 5 et la visualisation de l'affichage est idéale. Il n'y a aucune déformation de l'image à travers la fenêtre 5.

De préférence, la fenêtre n'est attachée sur sa tranche à la plaque de base 2 que par le joint 6 ou le flasque 66, 66' suivant la variante.

Le joint 6 est présent sur toute la périphérie de la fenêtre 5, ou en tout cas le long de la périphérie de la fenêtre 5 qui est en vis-à-vis de la plaque de base 2.

Le flasque 66, 66' est ainsi présent sur toute la périphérie de la fenêtre 5, ou en tout cas le long de la périphérie de la fenêtre 5 qui est en vis-à-vis de la plaque de base 2 afin de protéger le joint.

Le joint 6 présente ainsi une partie centrale 60 qui est située à la fois en vis-à-vis d'au moins une partie du chant 50 de la fenêtre 5 et en vis-à-vis d'une partie du pourtour 20 du trou ménagé dans la plaque de base 2 et qui accueille la fenêtre 5.

Comme expliqué ci-après, cette partie centrale 60 peut être située en vis-à-vis d'au moins une partie du chant de la fenêtre 5 sur la longueur et/ou la hauteur de ce chant 50 et cette partie de joint centrale 60 peut être située en vis-à-vis d'au moins une partie du pourtour 25 du trou sur la longueur et/ou la hauteur de ce trou.

Selon une caractéristique de l'invention, le joint 6 présente, de préférence, une partie de joint intérieure 62 s'étendant sous la surface intérieure 22 de la plaque 2 et/ou sous la surface intérieure 52 de la fenêtre 5.

Le joint 6 présente une partie de joint intérieure 62 qui s'étend de préférence à la fois sous la surface intérieure 22 de la plaque 2 et sous la surface intérieure 52 de la fenêtre 5, comme illustrée à l'aide des figures 2 à 11, afin d'améliorer la tenue mécanique entre la fenêtre 5 et la plaque de base 2 par l'intermédiaire du joint 6.

Dans une première sous-variante de réalisation de l'invention, c'est le joint 6 lui-même qui permet d'accrocher directement l'écran 7 ; pour ce faire, la partie de joint intérieure 62 présente, sous la surface intérieure 52 de la fenêtre 5, en coupe verticale :
- soit une forme de C, afin de pouvoir accueillir une partie de l'écran 7 de commande et/ou de visualisation dans une rainure 63 crée entre les ailes du C, comme illustrée en figures 2 et 5,
- soit une forme de L, afin de pourvoir faire reposer l'écran 7 sur la base du L, entre cette base et la surface intérieure 52 de la fenêtre 5.

Dans ces deux configurations, il est possible que la partie de joint intérieure 62 s'étende sous la surface intérieure 22 de la plaque 2.

Dans ces deux configurations, la forme en C ou en L est suffisamment allongée pour permettre de former un rail pour accueillir deux côtés de l'écran 7.

Avec ces configurations, il est ainsi possible de faire coulisser l'écran 7 dans la direction x pour le positionner correctement sous la fenêtre 5. Le blocage en direction y est assuré par au moins une butée 64 qui est présente dans chaque rainure 63. Le blocage en direction z est assuré par le fait que la hauteur de la rainure 63 est sensiblement la même que l'épaisseur de l'écran 7, ou tout au moins la même que l'épaisseur de la partie de l'écran 7 qui doit coulisser à l'intérieur de la rainure.

En référence à la figure 1, l'écran peut ainsi être glissé sous la fenêtre 5 dans la rainure 63 par la droite ou par la gauche ; il est aussi possible de prévoir qu'un bord gauche ou droit du joint 6 soit aussi pourvu d'une partie de joint intérieure 62 en forme de L ou de C afin que l'écran soit maintenu sur trois côtés une fois positionné correctement sous la fenêtre 5.

Pour augmenter la tenue mécanique du joint 6, il est possible de prévoir qu'il comporte un insert complètement intégré dans la matière du joint. Cet insert est de préférence métallique, avec un coefficient de dilatation qui est de préférence relativement faible et qui est ajusté aux contraintes thermiques de fabrication du joint 6 et de fonctionnement de l'appareil de cuisson.

L'insert peut être perforé pour que la matière du joint pénètre par les performations et augmente ainsi la cohésion mécanique entre l'insert et le joint.

Vue en coupe, l'insert peut être positionné au moins en partie dans la partie centrale de joint 60 et/ou dans la partie de joint extérieure 61 et/ou dans la partie de joint intérieure 62.

Dans une alternative à la première sous-variante de réalisation de l'invention, ce n'est pas le joint 6 lui-même qui permet d'accrocher directement l'écran 7, mais un accessoire attaché au joint 6 qui permet d'accrocher indirectement l'écran 7 au joint 6.

Cet accessoire peut être par exemple un insert comme indiqué précédemment, mais comportant d'une part une semelle 80 qui est intégrée au moins partiellement, voire complètement, dans une portion de matière du joint 6 et d'autre part au moins un élément saillant 81 faisant saillie au moins partiellement, voire complètement, en dehors dudit joint 6, pour la fixation dudit écran 7 de commande et/ou de visualisation. L'élément saillant 81 s'étend environ perpendiculairement au plan général de la semelle 80.

La semelle 80 peut être prévue le long de deux bords gauche et droite de la fenêtre 5 (en référence au positionnement de la figure 1). Elle permet de renforcer la liaison mécanique entre le joint 6 et l'écran 7.

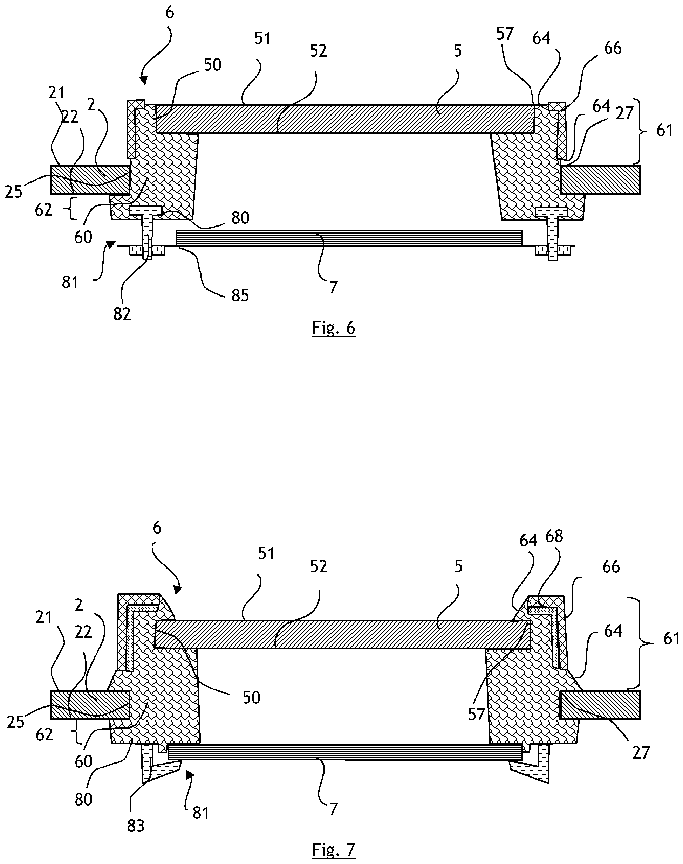

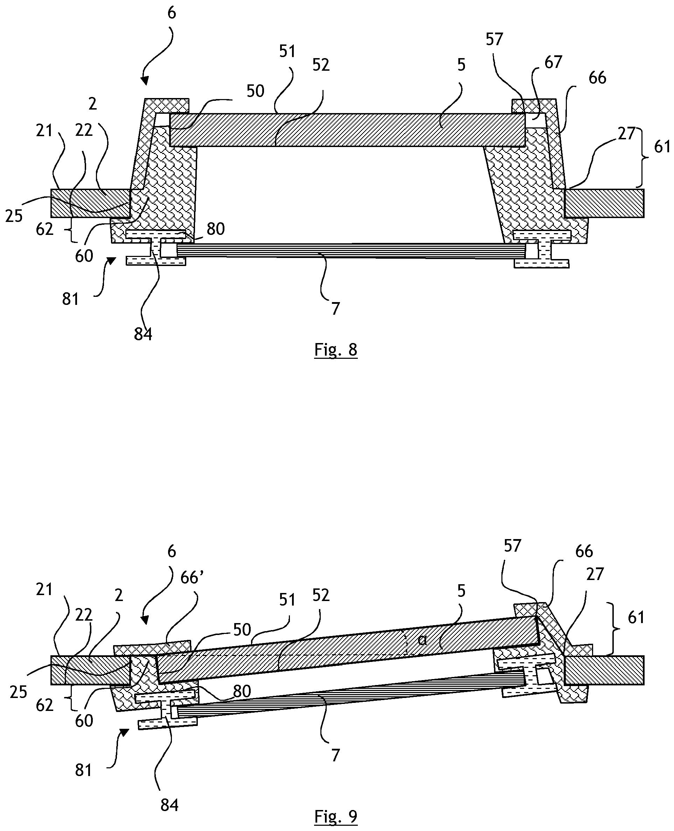

L'élément saillant 81 peut se présenter sous différentes formes :
- en figures 3, 4 et 6, l'élément saillant est une vis 82, soudée à la semelle 8 à son extrémité haute et pourvue d'un filetage en sa partie basse pour permettre de visser un écrou ; de préférence, deux vis sont prévus au moins le long de chacun des deux bords gauche et droite de la fenêtre 5 afin de permettre de retenir un support 85, emmanché sur les vis 82 et sur lequel est fixé l'écran 7 et permettre ainsi la fixation de l'écran indirectement au joint 6 dans les trois dimensions de l'espaces ;
- en figure 7, l'élément saillant est un support 83 recourbé (ou clip) en forme de L ; deux supports 83 sont de préférence prévus le long de chacun des deux bords gauche et droite de la fenêtre 5 afin de permettre de positionner et fixer l'écran 7 correctement sous la fenêtre 5 ; pour une meilleure retenue, il est possible de prévoir que l'écran soit pris en sandwich de chaque côté gauche, droit, entre le support 83 et la partie de joint intérieure 62 ; ce support 83 peut être fabriqué par exemple par pliage.
- en figures 8 à 11, l'insert est un rail 84 en forme de H ; un rail 84 est de préférence prévu le long de chacun des deux bords gauche et droite de la fenêtre 5 afin de permettre de coulisser l'écran 7 sur les rails pour le positionner correctement sous la fenêtre 5 ; pour une meilleure retenue, il est possible de prévoir que l'écran soit pris en sandwich de chaque côté gauche, droit, entre la partie saillante du rail 84 et la partie de joint intérieure 62 ; ce rail peut être fabriqué par exemple par extrusion.

En variante, l'élément saillant pourrait être un clip à la manière des clips connus pour la fixation de vitrages dans la baie d'une carrosserie.

Il est possible de prévoir par ailleurs qu'un écrou soit attaché (par exemple soudé) à une partie saillante d'un insert.

Comme visible sur les figures 2 à 4, il est possible de prévoir que la fenêtre 5 présente la même épaisseur que la plaque de base 2 et que la surface extérieure 51 de la fenêtre 5 soit exactement dans la continuité de la surface extérieure 21 de la plaque de base 2.

Toutefois, il est possible aussi que la fenêtre 5 soit moins épaisse que la plaque 2 et que le joint 6 permette ainsi de compenser cette différence d'épaisseur pour permettre que la surface extérieure 51 de la fenêtre 5 soit exactement dans la continuité de la surface extérieure 21 de la plaque de base 2 ; dans ce cas, la surface intérieure 52 de la fenêtre 5 est en retrait de la surface intérieure 22 de la plaque de base 2 vers le haut.

En figures 2 à 4, la partie de joint centrale 60 permet de réaliser une continuité de surface entre la surface extérieure 51 de la fenêtre 5 et la surface extérieure 21 de la plaque de base 2 en comblant d'une manière étanche aux fluides très exactement l'espace disponible entre ces deux surfaces. Il y a aussi continuité de surface entre l'arête extérieure 57 de la fenêtre 5 et l'arête extérieure 27 de la plaque de base 2.

En figure 2, le joint 6 est flush avec l'arête extérieure 27 et avec l'arête extérieure 57, mais le flasque 66' est surélevé par rapport au plan défini par l'arête extérieure 27. Le flasque 66' présente en coupe verticale une forme de rectangle ou de carré. Cette position surélevée du flasque empêche tout contact entre un ustensile de cuisine et le joint 6 en réalisant une butée verticale.

En figure 3, le flasque 66' est positionné flush, avec sa face extérieure dans le plan défini par l'arête extérieure 27.

En figure 4, la fenêtre 5 présente aussi la même épaisseur que la plaque de base 2 et le joint 6 est aussi flush avec l'arête extérieure 27 et avec l'arête extérieure 57 et le flasque 66' est aussi surélevé par rapport au plan défini par l'arête extérieure 27, mais en outre des moyens pour la fixation de l'écran 7 de commande et/ou de visualisation sous ladite fenêtre 5 sont attachés au flasque 66'. De plus, le flasque 66' présente, dans sa partie au-dessus du plan défini par l'arête extérieure 27, en coupe verticale, une forme de trapèze avec la base large du trapèze en bas. Cette position surélevée du flasque empêche tout contact entre un ustensile de cuisine et le joint 6 en réalisant une butée verticale. Il est possible de prévoir des trous dans le flasque afin que la matière de la partie centrale de joint 60 traverse le flasque pour un meilleur maintien.

En figures 5 à 8, la surface extérieure 51 de la fenêtre 5 est en saillie de la surface extérieure 21 de la plaque de base 2 vers le haut ; la surface extérieure 51 de la fenêtre 5 est ainsi surélevée vis-à-vis de la surface extérieure 21 de la plaque de base 2. Dans cette configuration la totalité de (toute) l'arête extérieure 57 de ladite fenêtre 5 n'est pas dans le plan de l'arête extérieure 27 de ladite plaque de base 2.

Cela peut être obtenu par exemple en prévoyant :
- que la surface intérieure 52 de la fenêtre 5 soit exactement dans la continuité de la surface intérieure 22 de la plaque de base 2 mais que la fenêtre 5 soit plus épaisse que la plaque de base 2 ; ou
- que la fenêtre 5 présente sensiblement la même épaisseur que la plaque de base 2 et que la surface intérieure 52 de la fenêtre 5 soit aussi en retrait de la surface intérieure 22 de la plaque de base 2, vers le haut.

Sur la figure 5 est illustré le fait que la partie centrale de joint 60 réalise la jointure sur toute la périphérie de la fenêtre 5 entre le chant 20 de la plaque de base 2 et le chant 50 de la fenêtre 5, afin de protéger le chant 50 de la fenêtre 5. Cette protection est complétée par le flasque 66

En variante, il est possible de prévoir que certains bords, voire tous les bords, périphériques de la surface extérieure 51 de la fenêtre 5 soit biseautés (angle non droit).

Il est possible de prévoir que la fenêtre 5 permette un effet de loupe vis-à-vis de l'écran 7 pour tout observateur regardant l'écran 7 du dessus de la fenêtre 5, soit par l'intermédiaire d'une feuille de verre présentant une focale particulière, soit par l'intermédiaire d'un film polymère transparent collé contre la surface intérieure 52.

En figures 9 à 11, à la différence de toutes les variantes précédentes, la fenêtre 5 n'est pas positionnée parallèlement à la plaque de base 2, mais inclinée par rapport à cette plaque, d'un angle α compris entre 2° et 45 °, voire compris entre 5° et 25°.

Dans la configuration de la figure 9, une partie seulement de l'arête extérieure 57 de ladite fenêtre 5 (à gauche sur la figure) est dans le plan de l'arête extérieure 27 de ladite plaque de base 2 et une partie de l'arête extérieure 57 de ladite fenêtre 5 (à droite sur la figure) n'est pas dans le plan de l'arête extérieure 27 de ladite plaque de base 2.

Sur la figure 9 est aussi illustré le fait que la partie centrale de joint 60 réalise la jointure étanche sur toute la périphérie de la fenêtre 5 entre le chant 20 de la plaque de base 2 et le chant 50 de la fenêtre 5, afin de protéger le chant 50 de la fenêtre 5. Cette protection est complétée par le flasque 66' à gauche de la figure et par le flasque 66 à droite de la figure.

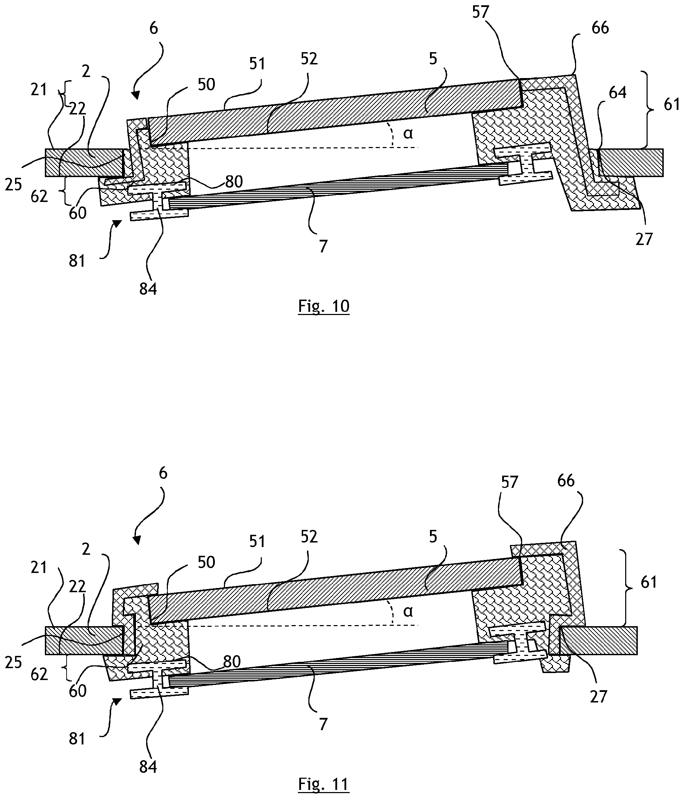

Pour les figures 10 et 11, à nouveau, la totalité de (toute) l'arête extérieure 57 de ladite fenêtre 5 n'est pas dans le plan de l'arête extérieure 27 de ladite plaque de base 2. La partie centrale de joint 60 réalise la jointure étanche sur toute la périphérie de la fenêtre 5 entre le chant 20 de la plaque de base 2 et le chant 50 de la fenêtre 5, afin de protéger le chant 50 de la fenêtre 5 et cette protection est complétée par le flasque 66.

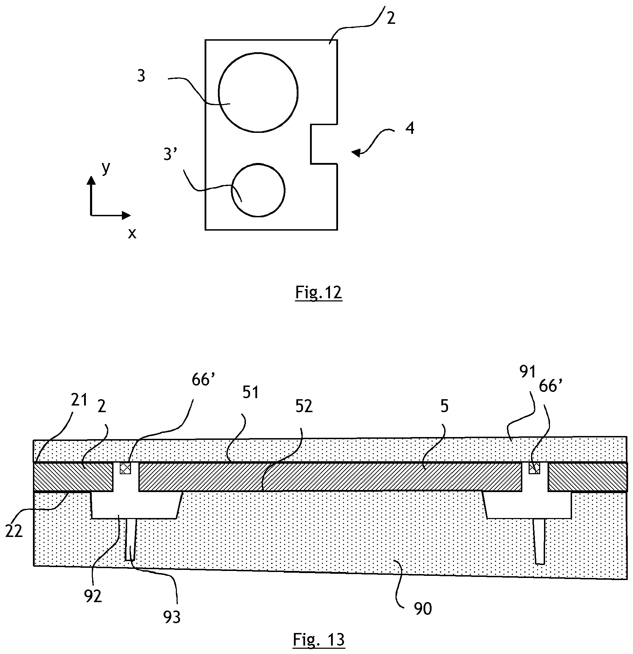

En figure 12 une autre plaque de base 2 est illustrée : à la différence de la plaque de base de la figure 1, seulement deux zone de cuisson 3, 3'sont prévues.

Par ailleurs, à la différence de la plaque de base de la figure 1, le trou qui accueille la zone de commande et/ou d'information 4 n'est pas un trou complet, mais un trou partiel, le long d'un des bords de la plaque de base 2 (ici le bord droit).

Ainsi, ce trou est un trou débouchant dans le sens où il débouche sur la surface extérieure 21 de la plaque de base 2, ainsi que sur sa surface intérieure 22 mais ce trou n'est pas un trou complet dans le sens où sa périphérie, tant en surface extérieure qu'en surface intérieure, n'est pas fermée.

Dans ce cas, le joint 6 n'est présent que le long de trois bords de la périphérie de la fenêtre 5, ou en tout cas le long de la périphérie de la fenêtre 5 qui est en vis-à-vis de la plaque de base 2. Un flasque selon l'invention protège le joint pour empêcher tout contact du joint avec un ustensile de cuisson chaud.

Il est possible de prévoir que la fenêtre 5 s'étende au-delà du bord (ici le bord droit) de la plaque de base 2 dans lequel est ménagée l'encoche qui forme le trou.

Pour cette variante de la figure 12, il est possible d'utiliser l'une des solutions de joint 6 et de flasque 66 ou 66' présentée aux figures 2 à 11.

Quelle que soit la forme du trou (figure 1 ou figure 12) dans lequel la fenêtre 5 est positionnée ou au-dessus duquel la fenêtre 5 est positionnée, ce trou est, de préférence, formé par découpage de la plaque de base 2 avant l'étape de céramisation dans le cas d'une plaque de base vitrocéramique.

Il est possible de prévoir que la fenêtre 5 soit compatible avec un écran 7 tactile en prévoyant un film transparent conducteur contre la surface intérieure 52.

Les solutions présentées ci-avant pour la fixation de l'écran 7 de commande et/ou de visualisation sous ladite fenêtre 5 présentent l'avantage important de pouvoir changer l'écran 7, au besoin, sans nécessiter le changement de la fenêtre 5 et surtout, sans nécessiter de changer le joint 6 avec son (ou ses) flasque(s), tout en garantissant que le nouvel écran 7 soit correctement positionné et fixé par rapport à la fenêtre 5.

Par ailleurs, bien que cela ne soit pas dessiné, il est possible que la plaque de base ne soit pas plate ; Dans ce cas, au moins en partie le long de la périphérie du trou de la plaque de base, la surface extérieure de la fenêtre présente un épaulement, vers l'intérieur ou l'extérieur.

Pour réaliser le joint 6 et le (ou les) flasque(s) 66, 66', plusieurs solutions peuvent être mises en oeuvre alternativement :
Dans une première solution, dite « d'encapsulation », illustrée à l'aide des figures 13 à 16 en lien avec la solution de la figure 3, la plaque de base 2, la fenêtre 5 et le (ou les) flasque(s) 66, 66' ainsi que des moyens pour la fixation de l'écran de commande et/ou de visualisation sont tous disposées dans une partie de moule 90 puis une autre partie de moule 91 est fermée sur la précédente ; Une cavité 92 de moulage est ménagée entre ces deux parties de moule, cette cavité présentant en creux la forme souhaitée du joint 6 (ici la forme du joint de la figure 3).

La cavité 92 de moulage comporte par ailleurs des creux 93 pour le positionnement des vis 82 avant le moulage afin que la semelle 80 de chaque vis soit positionnée dans la cavité de moulage mais que la partie filetée de chaque vis soit protégée pour que la matière du joint n'entre pas en contact avec le pas de vis lors du moulage du joint.

Ensuite une matière synthétique est injectée dans la cavité de moulage afin de former le joint 6 comportant des moyens pour la fixation de l'écran de commande et/ou de visualisation.

Cette solution est en particulier pratique à mettre en oeuvre lorsque le joint comporte un insert car elle permet de s'assurer du positionnement correcte de l'insert vis-à-vis des éléments introduits dans le moule : la plaque de base 2, la fenêtre 5 et le (ou les) flasque(s) 66, 66'.

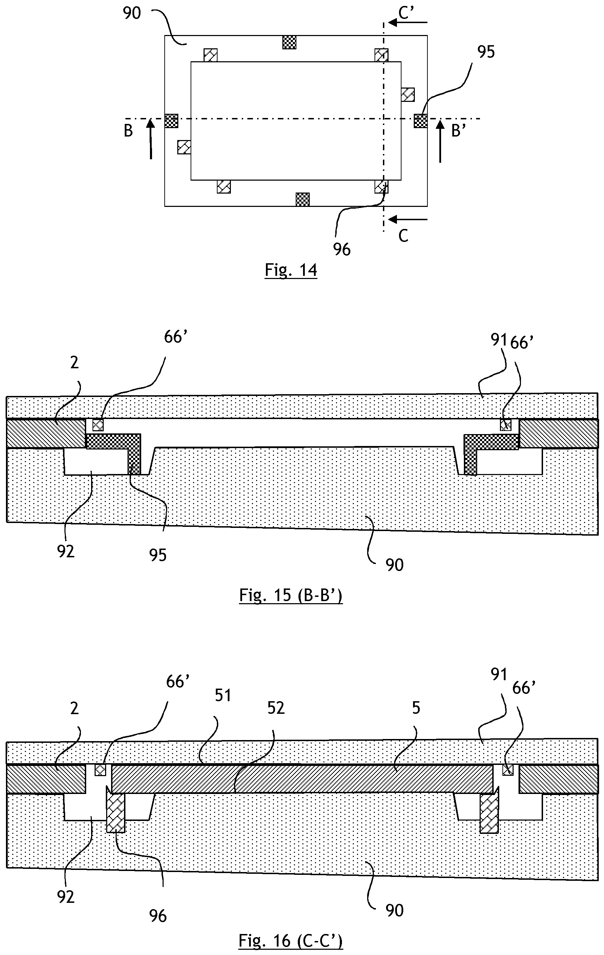

Les figures 14 à 16 illustrent une façon de positionner correctement la plaque de base 2 et le (ou les) flasque(s) 66, 66' vis-à-vis de la partie de moule 90 et la fenêtre 5 vis-à-vis de cette partie de moule 90.

La partie de moule 90 comporte ainsi des éléments de centrage escamotables 95 pour le centrage de la plaque de base 2 vis-à-vis de la partie de moule 90, ainsi que des éléments de centrage fixes 96 pour le centrage de la fenêtre 5 vis-à-vis de la partie de moule 90.

Après centrage de la plaque de base 2 vis-à-vis de la partie de moule 90 grâce aux éléments de centrage escamotables 95, comme en figure 10, ces éléments sont escamotés dans la partie de moule 90, puis la fenêtre 5 est introduite dans la partie de moule et est centrée à l'aide des éléments de centrage fixes 96, comme en figure 11.

Il est à noter que pour la solution d'encapsulation, il n'est pas nécessaire que le moule accueille la totalité de la plaque de base 2 ; il peut être prévu que le moulage ne soit opéré que sur une partie de la plaque de base 2, la partie qui comporte le trou dans lequel la fenêtre 5 est fixée grâce au joint 6.

Dans une deuxième solution, dite « de collage », le joint 6 est préformé (fabriqué en forme souhaitée préalablement) et il comporte ainsi déjà le (ou les) flasque(s) 66, 66' et des moyens pour la fixation de l'écran 7 de commande et/ou de visualisation ; ensuite, ce joint 6 est collé à la plaque de base 2 et/ou à la fenêtre 5.

Dans une troisième solution, dite « par rétractation », le joint 6 comportant le (ou les) flasque(s) 66, 66' et des moyens pour la fixation rigide de l'écran de commande et/ou de visualisation est moulé contre la plaque de base 2 ou contre la fenêtre 5 ; ensuite, la fenêtre 5 ou respectivement la plaque 2 est alors introduite dans une rainure du cadre formé par le joint 6 lorsque celui est chaud et la fenêtre 5 est alors fixée à la plaque de base 2 par rétractation du matériau constituant le joint 6, sans adhésion chimique entre le joint et la fenêtre ou respectivement la plaque de base.

Si le joint est moulé contre la plaque de base 2, la rainure du cadre qui accueille la fenêtre 5 est formée par la partie centrale de joint 60, la partie de joint extérieure 61 s'étendant sur la fenêtre 5 et la partie de joint intérieure 62 s'étendant sous la fenêtre 5.

Si le joint est moulé contre la fenêtre 5, la rainure du cadre qui accueille la plaque de base 2 est formée par la partie centrale de joint 60, la partie de joint extérieure 61 s'étendant sur la plaque de base 2 et la partie de joint intérieure 62 s'étendant sous la plaque de base 2.

## Revendications

1. Plaque (1) de cuisson pour un appareil de cuisson fixe ou mobile comportant une plaque de base (2), notamment une plaque de base vitrocéramique, présentant un chant (20), une surface extérieure (21) et une arête extérieure (27) périphérique formant un plan et qui est située à l'intersection entre ledit chant (20) et ladite surface extérieure (21), ladite plaque (1) de cuisson comportant au moins une zone de cuisson (3, 3') et au moins une zone de commande et/ou d'information (4), ladite zone de commande et/ou d'information (4) comportant une fenêtre (5) séparée de ladite plaque de base (2) et présentant un chant (50), une surface extérieure (51) et une arête extérieure (57) périphérique située à l'intersection entre ledit chant (50) et ladite surface extérieure (51), ladite plaque (1) de cuisson comportant en outre un joint (6) en matière synthétique qui est situé entre une partie du chant (20) de ladite plaque de base (2) et une partie du chant (50) de ladite fenêtre (5) pour permettre l'étanchéité entre ladite fenêtre et ladite plaque de base, ledit joint (6) présentant une surface extérieure (61), une partie au moins de, ou toute, l'arête extérieure (57) périphérique de ladite fenêtre (5) étant dans le plan de l'arête extérieure (27) périphérique de ladite plaque de base (2), **caractérisée en ce que** ladite plaque de cuisson comporte au moins un flasque (66) en matière différente de celle du joint (6) qui est disposé au-dessus ou sur ledit joint (6), une partie au moins de la surface extérieure (61) dudit joint (6) qui est située entre la surface extérieure (21) de ladite plaque de base (2) et la surface extérieure (51) de ladite fenêtre (5) étant couverte par ledit flasque (66').

2. Plaque (1) de cuisson selon la revendication 1, **caractérisée en ce que** la matière dudit flasque (66') présente un point de transformation de solide à visqueux Tg, ou un point de fusion Tf, qui est supérieur au point de transformation de la matière dudit joint (6) Tg'.

3. Plaque (1) de cuisson selon la revendication 1 ou la revendication 2, **caractérisée en ce que** la matière dudit flasque (66') présente un point de transformation de solide à visqueux Tg ou de fusion Tf qui est supérieur à 200°C et de préférence supérieur à 250°C, voire supérieur à 300°C.

4. Plaque (1) de cuisson selon l'une quelconque des revendications 1 à 3, **caractérisée en ce que** la matière dudit joint (6) présente un point de transformation de solide à visqueux Tg', ou de fusion Tf', qui est égal ou inférieur à 200°C, voire qui est égal ou inférieur à 180°C.

5. Plaque (1) de cuisson selon l'une quelconque des revendications 1 à 4, **caractérisée en ce que** une lame d'air (67) et/ou un élément isolant (68) est interposé entre ledit flasque (66') et ledit joint (6), sous une partie dudit flasque (66').

6. Plaque (1) de cuisson selon l'une quelconque des revendications 1 à 5, **caractérisée en ce que** ledit flasque (66') est présent tout le long de la partie du joint (6) qui sépare ladite fenêtre (5) de ladite plaque de base (2).

7. Plaque (1) de cuisson selon l'une quelconque des revendications 1 à 6, **caractérisée en ce que** ledit joint (6) couvre au moins une partie de la longueur de l'arête extérieure (27) de ladite plaque de base (2) et/ou ledit joint (6) couvre au moins une partie de la longueur de l'arête extérieure (57) de ladite fenêtre (5).

8. Plaque (1) de cuisson selon l'une quelconque des revendications 1 à 7 **caractérisée en ce que** ledit flasque (66') est dans la continuité [« flush »] d'une partie au moins de la longueur de l'arête extérieure (27) de ladite plaque de base (2) et/ou est dans la continuité d'une partie au moins de la longueur de l'arête extérieure (57) de ladite fenêtre (5).

9. Plaque (1) de cuisson selon l'une quelconque des revendications 1 à 8, **caractérisée en ce que,** vu en coupe verticale à un endroit au moins, ledit joint (6) présente une surface extérieure visible (64) dont la largeur est égale ou inférieure à 2 mm, ledit flasque (66') recouvrant de préférence toute la surface extérieure (61) du joint (6) qui est située entre la surface extérieure (21) de ladite plaque de base (2) et la surface extérieure (51) de ladite fenêtre (5).

10. Plaque (1) de cuisson selon l'une quelconque des revendications 1 à 9, **caractérisée en ce que** ledit joint (6) comporte des moyens pour la fixation d'un écran (7) de commande et/ou de visualisation sous ladite fenêtre (5).

11. Plaque (1) de cuisson selon l'une quelconque des revendications 1 à 9, **caractérisée en ce que** ledit flasque (66') comporte des moyens pour la fixation d'un écran (7) de commande et/ou de visualisation sous ladite fenêtre (5).

12. Plaque (1) de cuisson selon l'une quelconque des revendications 1 à 11, **caractérisée en ce que** ledit flasque (66') comporte, vu en coupe verticale à un endroit au moins, deux parties :
- une partie sensiblement verticale située au-dessus du plan de la surface extérieure (21) de ladite plaque de base (2), et
- une partie sensiblement horizontale située dans la continuité d'une partie au moins de l'arête extérieure (57) de ladite fenêtre (5) ou située au-dessus d'une partie au moins de l'arête extérieure (57) de ladite fenêtre (5).

13. Appareil de cuisson fixe ou mobile muni d'une plaque de cuisson (1) selon l'une quelconque des revendications 1 à 12, ladite plaque de cuisson comportant une plaque de base (2), notamment une plaque de base vitrocéramique, présentant un chant (20), une surface extérieure (21) et une arête extérieure (27) périphérique formant un plan et qui est située à l'intersection entre ledit chant (20) et ladite surface extérieure (21), ladite plaque (1) comportant au moins une zone de cuisson (3, 3') et au moins une zone de commande et/ou d'information (4), ladite zone de commande et/ou d'information (4) comportant une fenêtre (5) séparée de ladite plaque de base (2) et présentant un chant (50), une surface extérieure (51) et une arête extérieure (57) périphérique à l'intersection entre ledit chant (50) et ladite surface extérieure (51), ladite plaque (1) comportant en outre un joint (6) en matière synthétique qui est situé entre une partie du chant (20) de ladite plaque de base (2) et une partie du chant (50) de ladite fenêtre (5) pour permettre l'étanchéité entre ladite fenêtre et ladite plaque de base, ledit joint (6) présentant une surface extérieure (61), une partie au moins de, ou toute, l'arête extérieure (57) périphérique de ladite fenêtre (5) étant dans le plan de l'arête extérieure (27) périphérique de ladite plaque de base (2), **caractérisé en ce que** ladite plaque de cuisson comporte au moins un flasque (66) en matière différente de celle du joint (6) qui est disposé au-dessus ou sur ledit joint (6), une partie au moins de la surface extérieure (61) dudit joint (6) qui est située entre la surface extérieure (21) de ladite plaque de base (2) et la surface extérieure (51) de ladite fenêtre (5) étant couverte par ledit flasque (66').

14. Procédé de fabrication d'une plaque de cuisson (1) selon l'une quelconque des revendications 1 à 12, **caractérisé en ce que** ladite plaque de base (2), ladite fenêtre (5) et ledit flasque (66') sont disposés dans un moule qui est ensuite fermé **et en ce qu'**une matière synthétique est ensuite injectée dans une cavité (92) de moulage afin de former ledit joint (6).

## Patentansprüche

1. Kochfeld (1) für ein feststehendes oder mobiles Kochgerät, das eine Grundplatte (2), insbesondere eine Glaskeramikgrundplatte, mit einem Rand (20), einer Außenfläche (21) und einer eine Ebene bildenden Außenumfangskante (27) umfasst, die an dem Schnittpunkt zwischen dem Rand (20) und der Außenfläche (21) liegt, wobei das Kochfeld (1) mindestens eine Kochzone (3, 3') und mindestens eine Steuer- und/oder Informationszone (4) aufweist, wobei die Steuer- und/oder Informationszone (4) ein von der Grundplatte (2) getrenntes Fenster (5) mit einem Rand (50), einer Außenfläche (51) und einer Außenumfangskante (57) aufweist, die an dem Schnittpunkt zwischen dem Rand (50) und der Außenfläche (51) liegt, wobei das Kochfeld (1) ferner eine Kunststoffdichtung (6) aufweist, die zwischen einem Teil des Randes (20) der Grundplatte (2) und einem Teil des Randes (50) des Fensters (5) angeordnet ist, um die Abdichtung zwischen dem Fenster und der Grundplatte zu ermöglichen, wobei die Dichtung (6) eine Außenfläche (61) aufweist, wobei mindestens ein Teil der oder die gesamte Außenumfangskante (57) des Fensters (5) in der Ebene der Außenumfangskante (27) der Grundplatte (2) liegt, **dadurch gekennzeichnet, dass** das Kochfeld mindestens eine Endplatte (66) aus einem anderen Material als demjenigen der Dichtung (6) aufweist, die über oder auf der Dichtung (6) angeordnet ist, wobei mindestens ein Teil der Außenfläche (61) der Dichtung (6), der sich zwischen der Außenfläche (21) der Grundplatte (2) und der Außenfläche (51) des Fensters (5) befindet, durch die Endplatte (66') abgedeckt ist.

2. Kochfeld (1) nach Anspruch 1, **dadurch gekennzeichnet, dass** das Material der Endplatte (66') einen Umwandlungspunkt Tg von festen in viskos oder einen Schmelzpunkt Tf aufweist, der höher als der Umwandlungspunkt des Materials der Dichtung (6) Tg' ist.

3. Kochfeld (1) nach Anspruch 1 oder Anspruch 2, **dadurch gekennzeichnet, dass** das Material der Endplatte (66') einen Umwandlungspunkt Tg von fest in viskos oder einen Schmelzpunkt Tf aufweist, der höher als 200 °C und vorzugsweise höher als 250 °C, sogar höher als 300 °C ist.

4. Kochfeld (1) nach einem der Ansprüche 1 bis 3, **dadurch gekennzeichnet, dass** das Material der Dichtung (6) einen Umwandlungspunkt Tg' von fest in viskos oder einen Schmelzpunkt Tf aufweist, der gleich oder niedriger als 200 °C, sogar gleich oder niedriger als 180 °C ist.

5. Kochfeld (1) nach einem der Ansprüche 1 bis 4, **dadurch gekennzeichnet, dass** ein Luftspalt (67) und/oder ein Isolierelement (68) zwischen der Endplatte (66') und der Dichtung (6) unter einem Teil der Endplatte (66') angeordnet ist.

6. Kochfeld (1) nach einem der Ansprüche 1 bis 5, **dadurch gekennzeichnet, dass** die Endplatte (66') entlang des gesamten Teils der Dichtung (6) vorhanden ist, der das Fenster (5) von der Grundplatte (2) trennt.

7. Kochfeld (1) nach einem der Ansprüche 1 bis 6, **dadurch gekennzeichnet, dass** die Dichtung (6) mindestens einen Teil der Länge der Außenkante (27) der Grundplatte (2) abdeckt und/oder die Dichtung (6) mindestens einen Teil der Länge der Außenkante (57) des Fensters (5) abdeckt.

8. Kochfeld (1) nach einem der Ansprüche 1 bis 7, **dadurch gekennzeichnet, dass** die Endplatte (66') bündig ["flush"] mit mindestens einem Teil der Länge der Außenkante (27) der Grundplatte (2) ist und/oder bündig mit mindestens einem Teil der Länge der Außenkante (57) des Fensters (5) ist.

9. Kochfeld (1) nach einem der Ansprüche 1 bis 8, **dadurch gekennzeichnet, dass** die Dichtung (6), mindestens an einer Stelle in einem vertikalen Schnitt gesehen, eine sichtbare Außenfläche (64) aufweist, deren Breite gleich oder kleiner als 2 mm ist, wobei die Endplatte (66') vorzugsweise die gesamte Außenfläche (61) der Dichtung (6) abdeckt, die zwischen der Außenfläche (21) der Grundplatte (2) und der Außenfläche (51) des Fensters (5) liegt.

10. Kochfeld (1) nach einem der Ansprüche 1 bis 9, **dadurch gekennzeichnet, dass** die Dichtung (6) Mittel zur Befestigung eines Steuer- und/oder Anzeigebildschirms (7) unter dem Fenster (5) aufweist.

11. Kochfeld (1) nach einem der Ansprüche 1 bis 9, **dadurch gekennzeichnet, dass** die Endplatte (66') Mittel zur Befestigung eines Steuer- und/oder Anzeigebildschirms (7) unter dem Fenster (5) aufweist.

12. Kochfeld (1) nach einem der Ansprüche 1 bis 11, **dadurch gekennzeichnet, dass** die Endplatte (66'), mindestens an einer Stelle in einem vertikalen Schnitt gesehen, zwei Teile aufweist:
- einen im Wesentlichen vertikalen Teil, der über der Ebene der Außenfläche (21) der Grundplatte (2) liegt, und
- einen im Wesentlichen horizontalen Teil, der bündig mit mindesten einem Teil der Außenkante (57) des Fensters (5) angeordnet ist oder oberhalb mindestens eines Teils der Außenkante (57) des Fensters (5) liegt.

13. Feststehendes oder mobiles Kochgerät, das mit einem Kochfeld (1) nach einem der Ansprüche 1 bis 12 versehen ist, wobei das Kochfeld eine Grundplatte (2), insbesondere eine Glaskeramikgrundplatte, mit einem Rand (20), einer Außenfläche (21) und einer eine Ebene bildenden Außenumfangskante (27) umfasst, die an dem Schnittpunkt zwischen dem Rand (20) und der Außenfläche (21) liegt, wobei das Kochfeld (1) mindestens eine Kochzone (3, 3') und mindestens eine Steuer- und/oder Informationszone (4) aufweist, wobei die Steuer- und/oder Informationszone (4) ein von der Grundplatte (2) getrenntes Fenster (5) mit einem Rand (50), einer Außenfläche (51) und einer Außenumfangskante (57) an dem Schnittpunkt zwischen dem Rand (50) und der Außenfläche (51) aufweist, wobei das Feld (1) ferner eine Kunststoffdichtung (6) aufweist, die zwischen einem Teil des Randes (20) der Grundplatte (2) und einem Teil des Randes (50) des Fensters (5) liegt, um die Abdichtung zwischen dem Fenster und der Grundplatte zu ermöglichen, wobei die Dichtung (6) eine Außenfläche (61) aufweist, wobei mindestens ein Teil der oder die gesamte Außenumfangskante (57) des Fensters (5) in der Ebene der Außenumfangskante (27) der Grundplatte (2) liegt, **dadurch gekennzeichnet, dass** das Kochfeld mindestens eine Endplatte (66) aus einem anderen Material als demjenigen der Dichtung (6) aufweist, die über oder auf der Dichtung (6) angeordnet ist, wobei mindestens ein Teil der Außenfläche (61) der Dichtung (6), der sich zwischen der Außenfläche (21) der Grundplatte (2) und der Außenfläche (51) des Fensters (5) befindet, durch die Endplatte (66') abgedeckt ist.

14. Verfahren zur Herstellung eines Kochfeldes (1) nach einem der Ansprüche 1 bis 12, **dadurch gekennzeichnet, dass** die Grundplatte (2), das Fenster (5) und die Endplatte (66') in einer Form angeordnet werden, die dann geschlossen wird, und **dass** dann ein Kunststoff in einen Formhohlraum (92) eingespritzt wird, um die Dichtung (6) zu bilden.

## Claims

1. A cooktop (1) for a fixed or mobile cooking appliance, having a base plate (2), in particular a glass-ceramic base plate, having a side edge (20), an outer surface (21) and a peripheral outer edge (27) which forms a plane and which is located at the intersection between said side edge (20) and said outer surface (21), said cooktop (1) having at least one cooking area (3, 3') and at least one control and/or information area (4), said control and/or information area (4) having a window (5) that is separated from said base plate (2) and has a side edge (50), an outer surface (51) and a peripheral outer edge (57) located at the intersection between said side edge (50) and said outer surface (51), said cooktop (1) also having a seal (6) made of synthetic material which is located between a part of the side edge (20) of said base plate (2) and a part of the side edge (50) of said window (5) so as to provide sealing between said window and said base plate, said seal (6) having an outer surface (61), at least a part, or all, of the peripheral outer edge (57) of said window (5) being in the plane of the peripheral outer edge (27) of said base plate (2), **characterized in that** said cooktop has at least one end plate (66) which is made of different material than that of the seal (6) and is disposed above or on said seal (6), at least a part of the outer surface (61) of said seal (6) which is located between the outer surface (21) of said base plate (2) and the outer surface (51) of said window (5) being covered by said end plate (66').

2. The cooktop (1) as claimed in claim 1, **characterized in that** the material of said end plate (66') has a transformation point Tg from solid to viscous, or a melting point Tf, which is greater than the transformation point Tg' of the material of said seal (6).

3. The cooktop (1) as claimed in claim 1 or claim 2, **characterized in that** the material of said end plate (66') has a transformation point Tg from solid to viscous, or a melting point Tf which is greater than 200°C and preferably greater than 250°C, or even greater than 300°C.

4. The cooktop (1) as claimed in any one of claims 1 to 3, **characterized in that** the material of said seal (6) has a transformation point Tg' from solid to viscous, or a melting point Tf, which is less than or equal to 200°C, or even which is less than or equal to 180°C.

5. The cooktop (1) as claimed in any one of claims 1 to 4, **characterized in that** an air gap (67) and/or an insulating element (68) is interposed between said end plate (66') and said seal (6), under a part of said end plate (66').

6. The cooktop (1) as claimed in any one of claims 1 to 5, **characterized in that** said end plate (66') is present along the entire length of that part of the seal (6) that separates said window (5) from said base plate (2).

7. The cooktop (1) as claimed in any one of claims 1 to 6, **characterized in that** said seal (6) covers at least a part of the length of the outer edge (27) of said base plate (2) and/or said seal (6) covers at least a part of the length of the outer edge (57) of said window (5).

8. The cooktop (1) as claimed in any one of claims 1 to 7, **characterized in that** said end plate (66') is flush with at least a part of the length of the outer edge (27) of said base plate (2) and/or is flush with at least a part of the length of the outer edge (57) of said window (5).

9. The cooktop (1) as claimed in any one of claims 1 to 8, **characterized in that,** as seen in vertical section in at least one location, said seal (6) has a visible outer surface (64) having a width less than or equal to 2 mm, said end plate (66') preferably covering the entire outer surface (61) of the seal (6) which is located between the outer surface (21) of said base plate (2) and the outer surface (51) of said window (5).

10. The cooktop (1) as claimed in any one of claims 1 to 9, **characterized in that** said seal (6) has means for securing a control and/or display screen (7) under said window (5).

11. The cooktop (1) as claimed in any one of claims 1 to 9, **characterized in that** said end plate (66') has means for securing a control and/or display screen (7) under said window (5).

12. The cooktop (1) as claimed in any one of claims 1 to 11, **characterized in that** said end plate (66') has two parts, as seen in vertical section in at least one location:
- a substantially vertical part located above the plane of the outer surface (21) of said base plate (2), and
- an approximately horizontal part located flush with at least a part of the outer edge (57) of said window (5) or located above at least a part of the outer edge (57) of said window (5).

13. A fixed or mobile cooking appliance provided with a cooktop (1) as claimed in any one of claims 1 to 12, said cooktop having a base plate (2), in particular a glass-ceramic base plate, having a side edge (20), an outer surface (21) and a peripheral outer edge (27) which forms a plane and which is located at the intersection between said side edge (20) and said outer surface (21), said cooktop (1) having at least one cooking area (3, 3') and at least one control and/or information area (4), said control and/or information area (4) having a window (5) that is separated from said base plate (2) and has a side edge (50), an outer surface (51) and a peripheral outer edge (57) at the intersection between said side edge (50) and said outer surface (51), said cooktop (1) also having a seal (6) made of synthetic material which is located between a part of the side edge (20) of said base plate (2) and a part of the side edge (50) of said window (5) so as to provide sealing between said window and said base plate, said seal (6) having an outer surface (61), at least a part, or all, of the peripheral outer edge (57) of said window (5) being in the plane of the peripheral outer edge (27) of said base plate (2), **characterized in that** said cooktop has at least one end plate (66) which is made of different material than that of the seal (6) and is disposed above or on said seal (6), at least a part of the outer surface (61) of said seal (6) which is located between the outer surface (21) of said base plate (2) and the outer surface (51) of said window (5) being covered by said end plate (66').

14. A method for manufacturing a cooktop (1) as claimed in any one of claims 1 to 12, **characterized in that** said base plate (2), said window (5) and said end plate (66') are placed in a mold which is then closed **and in that** a synthetic material is then injected into a molding cavity (92) in order to form said seal (6).
